Europäisches Patentamt

European Patent Office

Office européen des brevets

(11) Publication number: **0 437 269 A2**

# EUROPEAN PATENT APPLICATION

(21) Application number: 91100288.9

(22) Date of filing: **10.01.91**

(51) Int. Cl.5: **G06K 9/66**

(30) Priority: **10.01.90 JP 3215/90**

(43) Date of publication of application:
**17.07.91 Bulletin 91/29**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Ozaki, Takayuki**
**441-10, Toubo, Taishi-Cho**
**Ibo-Gun, Hyogo-Ken(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Semiconductor pellet detection method.**

(57) An improved semiconductor pellet detection method is disclosed. In the method, an image of a semiconductor pellet is stored as a reference image in a memory, an image of a semiconductor pellet to be measured is taken a correlation coefficient between the reference image stored in said memory and the image taken is determined, and the image of a semiconductor pellet to be measured as a new reference image is stored in a different storage region of said memory when obtained correlation coefficient is small or detection is not possible. The method may further include the steps of: counting the number of reading a plurality of reference images stored in a memory to determine a frequency, and controlling the order of reading said plurality of reference images in accordance with the read frequency so as to realize learning.

FIG. 3

EP 0 437 269 A2

## SEMICONDUCTOR PELLET DETECTION METHOD

BACKGROUND OF THE INVENTION

The present invention relates to an image processing method, and more particularly, to a method suited to the automatic positioning of articles and the position detection of semiconductor pellets.

When the positioning of semiconductor pellets has been conventionally performed, the pattern detection apparatus used judges the presence or absence of pattern matching by computer processing wherein binarized signals produced by A/D conversion of pattern images obtained by a television camera, are stored in a two-dimensional local memory. Alternatively, there is a method whereby coincidence is detected between reference pattern signals stored in a reference pattern register beforehand and said binarized signals, and a method whereby the binarized signals are computer processed by a microcomputer or the like.

However, accompanying the conversion of these image output signals into binarized signals, it is necessary to set an optimum value for the threshold value for binarization so as to correspond to the changes in the shading, changes in the noise component, and drift of the dc current component of the image output. However, it is difficult to perform the optimum threshold value setting automatically. Furthermore, the amplitude of image output signals fluctuates in response to the reflection ratio corresponding to the surface status as determined by the particle roughness of an article to be detected, for example an aluminum film. Thus, it is necessary to irradiate the entire sample material so that a uniform and constant amount of reflected light is obtained, and so that stable binarization processing is possible. However, it is extremely difficult to obtain a stable illumination apparatus for this purpose. Furthermore, there is a large drift in the analogue signals for binarization processing and so it is difficult to obtain the suitable threshold level for binarization. Still furthermore, the "1" or the "0" configuring the binarization signals cannot be normalized, and there is a small noise margin in processing output data.

In this light of these problems there has been proposed a pattern detection apparatus in Japanese Patent Application Laid Open (Kokai) No. 57-137978 (1983) for which a detailed description is provided in the specification. This apparatus is characterized by having provided a correlation coefficient calculation circuit that calculates the correlation coefficient of input data and reference data that has been provided beforehand, and a judgment circuit to judge the input data for which the pattern is in greatest coincidence with the output data of this calculation circuit. In addition, this pattern detection apparatus uses two-dimensional data for the input data and the pattern reference data, performs extraction processing for one portion of the input data, and adopts a method whereby the correlation coefficient of the partial reference data provided beforehand and this extracted partial data is calculated.

The two-dimensional input data may be contracted and one portion is subjected to extraction processing, and correlation coefficient of the extracted contracted partial data and the contracted partial reference data provided beforehand is computer processed and control relating to the correlation coefficient calculation for the reference data and the input data corresponding to the results of that calculation is performed.

Furthermore, one portion of the input data corresponding to the contracted partial data for which the calculation results takes the maximum value is made the correlation coefficient calculation start position, and the weighting of the value of in the vicinity of the maximum value for this calculation result is determined, and the calculation results detect one portion of the input data corresponding to the contracted partial data for which the weighting value is maximum, as a general pattern detection apparatus, and performs correlation coefficient calculations for the input data of a predetermined range that has this portion as the central value.

Contracting the input data is performed by various predetermined conversions. For example, either data compression or filtering is used when this contraction is performed.

As has been described above, the pattern detection apparatus disclosed in Japanese Patent Application Laid Open No. 57-137978 (1983) uses the calculation of the correlation coefficient for reference data expressing a reference pattern provided beforehand, and digital or analog input data for the stable and highly efficient detection of fluctuations in the pattern image output or the same or similar patterns with respect to an analog waveform.

However, in a conventional semiconductor pellet detection method as has been described above, there may only be one reference pattern. Accordingly, since there are extreme differences in the brightness for the same type, it is difficult to perform recognition processing so as to absorb the difference of brightness even in the case of dark-light image processing. In addition, even in the case of the binarized image processing method, there is a method where the threshold level is changed and compensated when the image is input, but the illumination method necessary for this is difficult to achieve, since it is necessary to change the brightness or to change the angle of illumination, and this method can be said to still be in the development stage.

SUMMARY OF THE INVENTION

Accordingly, an object of the present invention is to provide a semiconductor pellet detection method that can greatly improve the recognition ratio even with respect to semiconductor pellets of different pattern reflectivity ratios.

According to the present invention, there is provided a semiconductor pellet detection method, comprising the steps of storing an image of a semiconductor pellet as a reference image in a memory, taking an image of a semiconductor pellet to be detected, determining a correlation coefficient between the reference image stored in said memory and the image taken; and storing the image of a semiconductor pellet to be detected as a new reference image in a different storage region of said memory when obtained correlation coefficient is small or detection is failed.

According to the present invention, every time when a semiconductor pellet that cannot be recognized because the pattern reflectivity ratio is different is found, the image of the semiconductor pellet is registered in a memory as second or further reference images. If the recognition is failed using a reference image, the next reference image is selected and further recognition processing is performed. In addition, the order of the processing of the reference images for recognition processing is changed such that the total number of times that the reference image is used, is counted and the reference image which has the greatest count number is used for performing processing first (i.e. learning processing). More specifically, the order of priority is determined by the usage frequency and so it is possible to shorten the time required for recognition processing.

BRIEF DESCRIPTION OF THE DRAWINGS

In the accompanying drawings,
FIG. 1 is a view of a monitor screen taken by an ITV camera for a semiconductor pellet;
FIG. 2 is a view showing the status when a plural number of reference images are stored in a memory;
FIG. 3 is a flow chart for describing a processing procedure;
FIG. 4 is a view describing a basic configuration of a detection apparatus used in the method of the present invention;
FIG. 5 is a detailed block diagram of FIG. 4;
FIG. 6 and FIG. 7 are block diagrams of specific examples of detection apparatuses used in this invention; and

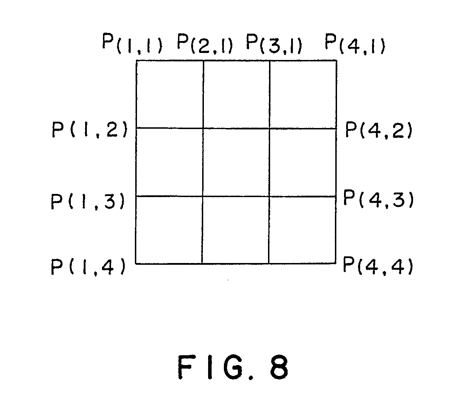

FIG. 8 is a view describing the operation.

DESCRIPTION OF THE PREFERRED EMBODIMENT

The preferred embodiments of the present invention will be described with reference to the accompanying drawings.

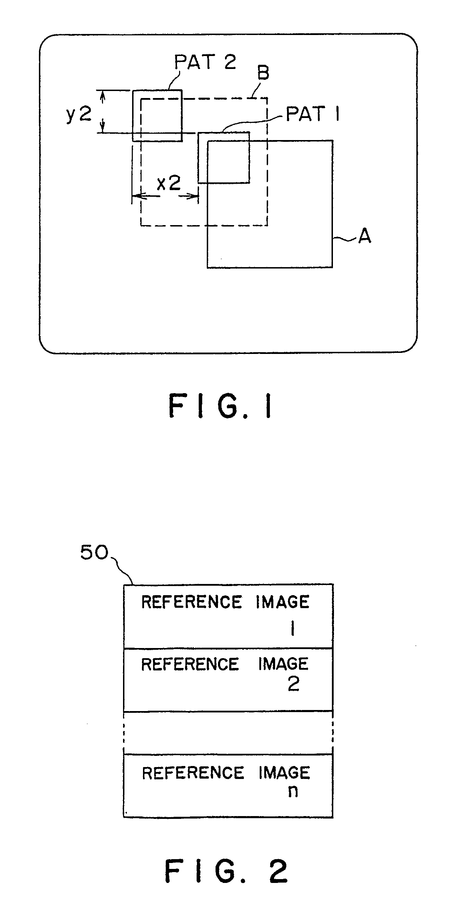

A semiconductor pattern detection apparatus using the method of the present invention, is provided with a reference image memory that stores a plurality of reference images. FIG. 1 shows a storing manner for these reference images, namely a chip pattern shown on a TV monitor screen. First, of the chip patterns indicated by A, the portion at the left top is made the reference image (PAT1), is stored in the reference image 1 region (refer to FIG. 2) of a reference image memory 30 and used to perform successive chip pattern recognition processing.

When chip pattern recognition using this PAT1 is failed , an image of a corresponding portion of the chip pattern B is stored in reference image 2 region as the reference image (PAT2) and similarly, chip patterns are stored as the reference images every time when recognition is failed.

The chip patterns A and B locate at different positions on the screen and so when PAT2 is used for image recognition, it is necessary to have compensation for the distance $x_2$, $y_2$ between PAT1 and PAT2, and as shown in FIG. 1. Measuring this distance is performed by measuring the coordinates PAT1 and PAT2 when the cursor on the screen of the CRT is positioned at a specific position (such as a corner) on the chip pattern.

As shown in FIG. 2, the number of stored reference image increases in the reference image storage region of the reference image memory 30, each time there is a situation where pattern recognition is failed.

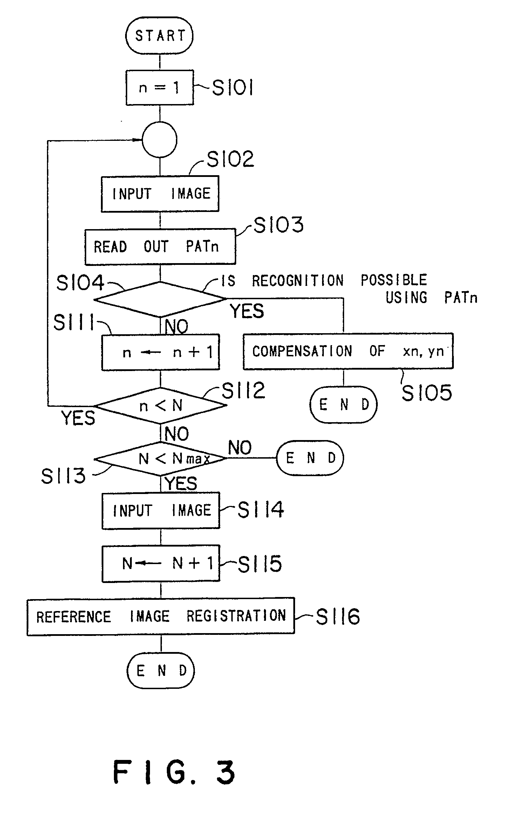

Fig. 3 shows a registration procedure of reference images into a reference image memory 50 and recognition procedure of semiconductor pellets using the reference images.

Here, it is supposed that N reference images of semiconductor pellets have been already registered.

At first, the reference image number n for performing pattern recognition is made to 1 (step S101). Then the image to be detected is input (step S102), and reference image n is read out from the reference image memory 50 (step S103). Next, whether the input image can be recognized using the reference image n or not (step S104). If the recognition is possible, compensation of xn and yn is performed in order to place the image to be recognized to the right position for better recognition.

On the other hand, when the pattern recognition is not possible using the reference pattern n by step S104, one is added to the present n number to obtain new number n (step S111). This new n is compared with the number N expressing number of registered reference images (step S112), and if n is smaller than N, the process step returns to step S102.

If n reaches N in the step S112, this means that there exists no reference images which can recognize input image. Accordingly, it is necessary to register the image input as a new reference image.

A registering procedure will be described as follows. First, number of registered reference images is compared to Nmax which means the maximum number of registration since there is a limitation in the number of registration regions (step S113). If n is smaller than Nmax, the image to be detected is input again (step S114), one is added to N to obtain new N, and the image is registered as a reference image N (step S115).

When such registration is performed, the pattern recognition is performed visually by an operator.

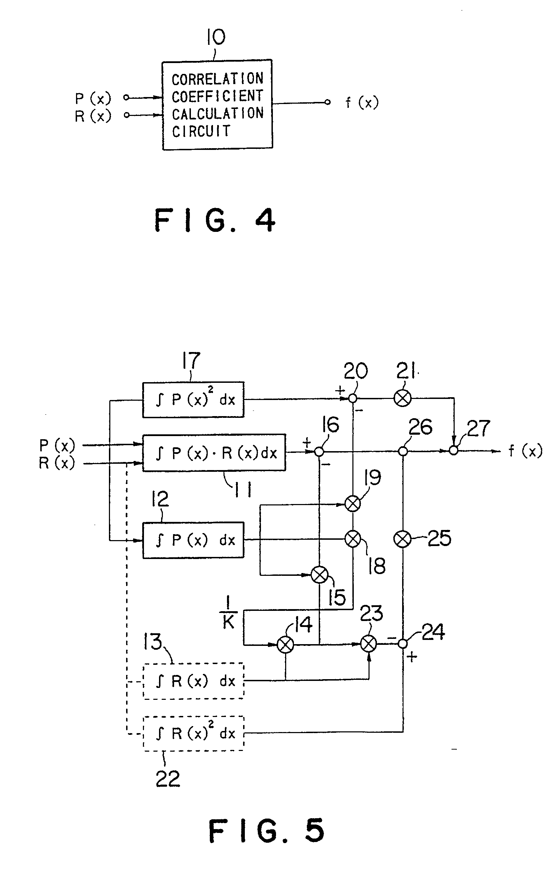

FIG. 4 shows the basic configuration of a system that uses the method of the present invention and reference data R(x) comprising Pattern input data P(x) (analog or digital) signals reference data signals as pattern reference signals read out from a reference image memory 50, are led to a correlation coefficient calculation circuit 10 and the degree of similarity of the patterns is determined by the calculation for the correlation coefficient f(x) on the basis of the following equation (1).

$$f(x) = \frac{\int P(x) \cdot R(x) dx - 1/k \cdot \int P(x) dx \cdot \int R(x) dx}{\sqrt{\int P(x)^2 dx - 1/k \cdot \{\int P(x) dx\}^2} \cdot \sqrt{\int R(x)^2 dx - 1/k \cdot \{\int R(x) dx\}^2}} \qquad \cdots (1)$$

Where k: integration range

Moreover, the coefficient f(x) is a value from +1 to 0 to -1 and shows the maximum degree of coincidence for [1]. Here, the details of the calculation circuit 10 will be described with reference to FIG. 5. In the first circuit 11, the first term of the numerator of equation (1) is determined by the calculation of $\int P(x) \cdot R(x)$, and the second circuit 12 calculates $\int R(x) dx$, and the term $\int R(x) dx$ is calculated by the third circuit 12. Since R(x) is a fixed value, it is sufficient to calculate R(x) only once. Furthermore, in the fourth circuit 14, the product of the output of the third circuit 13 and the constant 1/k is determined and in the fifth circuit 15, the product of the output of the second circuit 12 is determined to obtain the second term of the numerator of equation (1). Furthermore, in the sixth circuit 16, the difference between the output of the first circuit 11 and the output of the fifth circuit 15 is determined to calculate the numerator of equation (1).

In the seventh circuit 17, $\int P(x)^2 dx$ is calculated, and the product of the output of the second circuit 12 and the constant 1/k is determined by the eighth circuit 18, In the ninth circuit 19, the product of the output of the eighth circuit 18 and the output of the second circuit 12 is determined and in the tenth circuit 20, the product of the output of the seventh circuit 17 and the output of the ninth circuit 19 is determined. And in the 11th circuit 21, the output of the tenth circuit 20 raised to the 1/2 power is determined to obtain one portion of the denominator of equation (1).

Furthermore, in the twelfth circuit 22, the calculation for $\int R(x)^2 dx$ is performed and in the thirteenth circuit 23, the product of the output of the third circuit 13 and the output of the fourth circuit 14 is determined, and in the fourteenth circuit 24, the difference between the output of the twelfth circuit 22 and the output of the thirteenth circuit 23 is determined and furthermore, in the fifteenth circuit 25, the output of the fourteenth circuit 24 raised to the 1/2 power is determined so that the remaining portion of the denominator of equation 24 is determined.

In the 16th circuit 26, the output of the sixth circuit 16 (the numerator of equation (1)) is divided by the output of the fifteenth circuit 25, and furthermore, in the seventeenth circuit 27, the output of the sixteenth

4

circuit 26 is divided by the output of the sixteenth circuit 26 to end the calculation of equation (1) and determine the correlation coefficient f(x).

The formula for the calculation of equation (1) is not limited to the calculation order of the circuits shown in FIG. 5, either of the equations a or b shown below can be used instead.

$$a. \quad \frac{\Sigma P(x) \cdot R(x) - 1/k \cdot \Sigma P(x) \cdot \Sigma R(x)}{\sqrt{\Sigma P(x)^2 - 1/k \cdot \{\Sigma P(x)\}^2} \cdot \sqrt{\Sigma R(x)^2 - 1/k \cdot \{\Sigma R(x)\}^2}}$$

However, if any one of the values in root or numerator is negative, the calculation result is set to 0.

$$b. \quad \frac{\{\Sigma P(x) R(x) - 1/k \cdot \Sigma P(x) R(x)\}^2}{[\Sigma P(x)^2 - 1/k \cdot \{\Sigma P(x)\}^2][\Sigma R(x)^2 - 1/k \cdot \{\Sigma R(x)\}^2]}$$

However, when the input data is contracted, each of the transforms, such as Fourier transform, Hadamard transform, template processing (Laplacian, gradient, or other filters), data compression, filtering and the like are used for compression, and these can be used to determine the basic pattern and the correlation coefficient, so that pattern detection of the input data is performed.

In the semiconductor pellet detection method according to the present invention, since the input data is normalized and so pattern detection processing is performed with a sufficient margin for changes in the amplitude of signals corresponding to the brightness of the pattern image, and for changes in dc current component with respect to brightness. In addition, it is not necessary to perform binarization processing. Accordingly, considering the influence of noise in the correlation coefficient, since the noise index is in inverse proportion to the detection area, the correlation coefficient has sufficient noise margin in principle. Therefore, the pattern detection efficiency is improved, and stable detection is possible. Furthermore, it is also possible to have pattern detection with respect to analog signal waveforms and so this is also applicable to noise recognition and print character recognition.

Furthermore, by performing contraction of the input data or improving the calculation method, the number of times of calculation can be reduced and also the pattern detection processing time can be reduced.

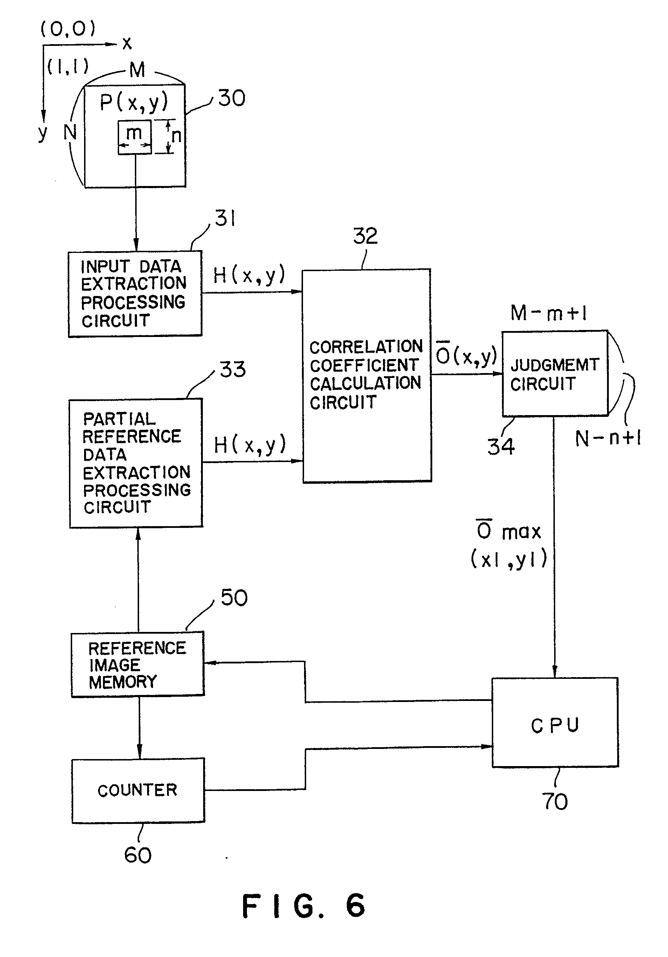

FIG. 6 shows the configuration of the hardware of the semiconductor pellet detection apparatus for the realization of the method of the present invention.

Two-dimensional input data 30 is extracted by the input data extraction processing circuit 31 and the extraction output is input to the correlation coefficient calculation circuit 32. On the other hand, the reference image read from the storage region of the reference image memory 50 designated from the CPU 70 is extracted by the reference data extraction processing circuit 33 and input in the same manner to the correlation coefficient calculation circuit 32. The output of this correlation coefficient calculation circuit 32 is applied to the judgment circuit 34 and the results are input to the CPU 70 for control.

The counter 60 calculates the number of reading reference images from the storage region of the reference image memory 50 and this calculation result is reported to the CPU 70. On the basis of these calculation results, the CPU 70 commands the reference image memory 50 so as to perform priority read of reference images that have a high frequency of use.

The following is a specific description of an example of the calculation, with reference to FIG. 6. More specifically, data group H (x, y) having m×n data which are one portion of the two-dimensional input data having N number of data in the y direction and M number of data in the x direction, for example, m number of data from the data D (x+0, y+0) of the point P (x, y) to the data D (x+m, y+0) of the point P (+m, y=0), the m number of data from point P (x+0, y+1) to point P (x+m, y+1), and in the same manner each m number of data from the point P (x+0, y+i) to the point P (x+m, y+i) (where i = 3, ..., n), is output and extracted in the x-direction as partial input data by the processing circuit 31, and input to one of the inputs of the correlation coefficient calculation circuit 32. Then, the reference data of the portion corresponding to the range of the partial input data H (x, y) is obtained by extracting the reference image read from the reference image memory 50 by the reference data extraction circuit 33, and this is the other input of the correlation coefficient calculation circuit 32.

In the correlation coefficient calculation circuit 32, a calculation is made according to equation (2) to obtain the correlation coefficient O (X, Y) for the point P (X, Y).

$$F(X) = \frac{A - \dfrac{1}{(m-1)(n-1)} B \cdot C}{\sqrt{D - \dfrac{1}{(m-1)(n-1)} B^2} \sqrt{E - \dfrac{1}{(m-1)(n-1)} C^2}}$$

$$\cdots \quad (2)$$

Where

$$A = \sum_{x=1}^{m} \sum_{y=1}^{n} \{P(x, y) \cdot R(x, y)\}$$

$$B = \sum_{x=1}^{m} \sum_{y=1}^{n} \{P(x, y)\}$$

$$C = \sum_{x=1}^{m} \sum_{y=1}^{n} \{R(x, y)\}$$

$$D = \sum_{x=1}^{m} \sum_{y=1}^{n} \{P(x, y)\}^2$$

$$E = \sum_{x=1}^{m} \sum_{y=1}^{n} \{R(x, y)\}^2$$

In addition, the calculation circuit 32 calculates for the range of coordinates of the point P (x, y) of ($1 \leq x \leq$ M-m + 1), ($1 \leq y \leq$ N-n + 1) so that the result of (M-m + 1)(N-n + 1) is obtained. In this case, the coordinate ($x_1$, $y_1$) indicating that the coefficient O (x, y) is the maximum value O is the detected pattern coordinate. Moreover, when the condition that O = ($x_1$, $y_1$) < DC, where DC is a standard value and is a separately specified constant (such as 0.5 or 0.7), is satisfied, it is judged that pattern detection is not possible or that the pattern to be detected does not exist.

The comparison judgment for DC and the maximum value O = ($x_1$, $y_1$) of the coefficient O (x, y) is performed by the judgment circuit 34 which is a stage after the correlation coefficient calculation circuit 32.

As has been described above, the output of the judgment circuit 34 is input to the CPU 70 and when it is judged that pattern detection is failed, the CPU 70 instructs the read of the reference pattern that exists in the next storage region.

In addition, every time there is a judgment, the CPU 70 performs revise of the priority order for the taking of the image in the reference image memory 50 on the basis of the calculation results of the counter 60, so that comparison judgment is always performed in the order of highest frequency of use.

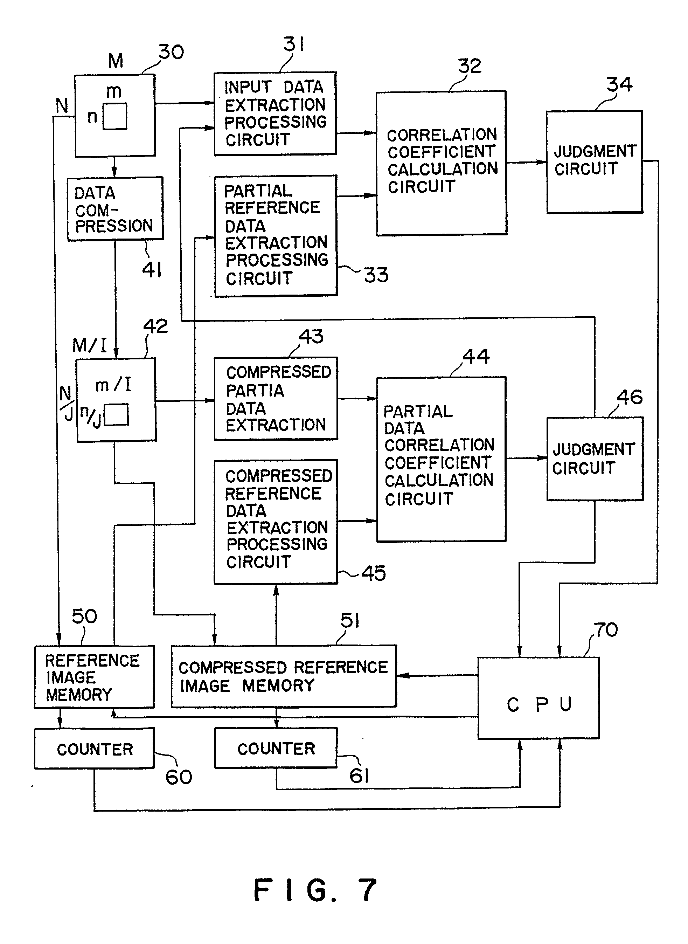

FIG. 7 shows another configuration for the realization of the method of the present invention. In this embodiment, those portions that are the same as corresponding portions in FIG. 6 are represented using the same reference numerals, and the corresponding descriptions of them will be omitted.

In this embodiment, the performance of data compression differs from that of FIG. 6. More specifically, the input image 30 is stored in the compressed reference image memory 51 as a compressed reference image of the compressed image 42 that was compressed by the data compression portion 41. This stored compressed reference image is read when there is pattern detect, and extracted by the compressed reference data extraction processing circuit 45 oorresponding to the extraction of the compressed image 42, and the correlation coefficient is determined by the partial data correlation coefficient calculation circuit 44, so that a judgment is performed by the judgment circuit 46.

In this configuration, in addition to using the configuration of FIG. 6 to enable the judgment of the by the image prior to compression, the results of the calculation for the number of times of read by the counters 60 and 61 is used as the basis for instructions with respect to the reference image memories 50 and 51 so that the reference image with the highest priority of use is read with priority. Accordingly, there is also a learning function that successively changes the read storage region with priority in accordance with the frequency of use of the reference image memories 50 and 51.

The following is a detailed description of the procedures for semiconductor pellet detection according to the compressed image.

The data group having M×N two-dimensional input data 30 is compressed by the data compression circuit 41 by 1/I in the X direction and 1/J in the Y direction so that all of the data is compressed by 1/IJ. In this example, when I = 4 and J = 4, then as is clear from FIG. 7, each of the data of the 16 points (k, 1) in the two dimensional input data 30 are compressed to the single data Q (k, 1) so that for example, the compressed data P (1, 1) determines the average value for each point of data for k = 1 to I, 1 = 1 to I in accordance with the following equation.

$$Q~(1,~1)~=~1/(I{\times}J)~\sum_{k=1}^{I}~\sum_{\ell=1}^{J}~p(k,~1)$$

Moreover, of the compressed data groups shown in FIG. 5, the compression data Q (k, 1) of the point P (k, 1) is represented by

$$Q~(a,~\beta)~=~1/(I{\times}J)~\sum_{k=1}^{I}~\sum_{\ell=1}^{J}~p(k,~1)P\{I(a{-}1){+}k{\cdot}J(\beta{-}1){+}1\}$$

One portion of the compressed data 42 obtained in this manner is extracted by the compressed partial data truncation processing circuit 43 and input to one of the inputs of the partial data correlation coefficient calculation circuit 44, read from the compressed reference image memory 51, and the compressed partial reference data that has been extracted by the compressed reference data extraction processing circuit 45 is input to the other of the inputs of the calculation circuit 44. This calculation circuit 44 performs the same calculation as shown for FIG. 7, generates a correlation coefficient matrix, and the results of this calculation are input to the judgment circuit 46 so that the rough position of the pattern coordinates of the input data are known. Accordingly, the input data extraction processing circuit 31 is controlled and the partial data of within a predetermined range that has the pattern coordinates from the input data 30 as the center are subjected to extraction processing. It has been empirically confirmed that position detection by processing such as this is possible. To describe this in detail, in the first embodiment where the data group (m × n) is extracted and all of the combinations of the correlation coefficients for the detection data of the (M × N) input data, the product calculation number of times becomes m × n × (M-m + 1)(N-n + 1), the square of the calculation number of times becomes m × n × (M-m + 1)(N-n + 1) and the sum calculation number of times becomes 2 × m × n × (M-m + 1)(N-n + 1).

In contrast, in the second embodiment where the input data (M × N) is extracted, and the correlation coefficient between this and the compressed partial reference data is calculated and the results are used as the basis for the calculation partial data for several places of the input data, the correlation coefficient is calculated with the partial reference data, and when compressed, the number of times for the product and the square becomes m/I × m/J × (M-m + 1)/I × (N-n + 1)/J and when compressed, the sum calculation number of times becomes 2 × m/I × m/J × (M-m + 1)/I × (N-n + 1)/J, and ultimately, there is the reduction of 1/(I²J²) when compared to the number of times of calculation in the first embodiment. The number of times of calculation in this case is calculated for D in the denominator and B in the second term of the numerator in equation (2), and for the other terms C and E, the results are used in the calculations when there is storage (registration) of the reference data but these calculations are not included in the numbers of times of the calculations described above.

Moreover, the data of the compressed portion can have one portion of the input data corresponding to

7

the compressed partial data controlled so that it is the start position of the correlation coefficient calculation with the reference data. Alternatively, the weighting of the value in the vicinity of the maximum value of the calculation results can be determined, and one portion of the input data corresponding to the compressed partial data for which the calculation results becomes this weighted value can be controlled to be made the start position for the correlation coefficient with the reference data.

In this manner, it is possible to have a pattern detection apparatus that can perform the stable and high-efficiency detection of the same or similar patterns with respect to an analog waveform or when there is a fluctuation in the pattern image image output.

In the present invention, advantageous effect of (1) an improvement in the yield, an increase in the productivity due to the improvement in the recognition efficiency, and the effect of (2) an illumination method that is simple and low cost are obtained.

More specifically, with respect to (1), when a recognition failure signal is output by a conventional recognition apparatus, an alarm signal is sent to the semiconductor assembly apparatus to stop machines. Because of this, the operating ratio of the machine drops and this brings on a decrease in the yield due to manual operation. However, in the method of the present invention provided with a plural number of reference images, there is a large improvement in the recognition ratio, an improved productivity and an improved yield.

## Claims

1. A semiconductor pellet detection method, comprising the steps of;
   storing an image of a semiconductor pellet as a reference image in a memory,
   taking an image of a semiconductor pellet to be detected,
   determining a correlation coefficient between the reference image stored in said memory and the image taken;
   performing detection of the pellet using the reference images stored when obtained correlation coefficient is higher than a standard value; and
   storing the image of a semiconductor pellet to be detected as a new reference image in a different storage region of said memory when obtained correlation coefficient is smaller than the standard value or detection is not possible.

2. The method according to claim 1, wherein the step of determining correlation coefficient includes searching a reference image having the highest correlation coefficient by sequentially reading out reference images stored in said memory in the order in which they were registered.

3. The method according to claim 1, wherein the method further comprises the steps of:
   counting the number of reading a plurality of reference images stored in a memory to determine a frequency, and
   controlling the order of reading said plurality of reference images in accordance with said read frequency.

4. The method according to claim 3, wherein said read frequency is calculated by a counter.

5. The method according to claim 1, wherein the step for determining correlation coefficient is performed after reference positions of an image of a semiconductor pellet to be measured and that of a reference image are in coincidence.

8

FIG. I

FIG. 2

START

$n = 1$ — S101

S102

INPUT IMAGE

READ OUT PATn — S103

S104 — IS RECOGNITION POSSIBLE USING PATn

YES

NO

S111 — $n \leftarrow n + 1$

COMPENSATION OF $x_n, y_n$

END — S105

S112 — $n < N$

YES

NO

$N < N_{max}$ — NO — END

S113

YES

INPUT IMAGE — S114

$N \leftarrow N + 1$ — S115

REFERENCE IMAGE REGISTRATION — S116

END

FIG. 3

10

10

P (x) ○ → | CORRELATION
R (x) ○ → | COEFFICIENT
| CALCULATION
| CIRCUIT | ○ f (x)

# F I G. 4

17

$\int P(x)^2 dx$

P (x) →
R (x) →

$\int P(x) \cdot R(x) dx$

11

12

$\int P(x) dx$

13

$\int R(x) dx$

22

$\int R(x)^2 dx$

20  21

16  26  27

f (x)

19

25

18

15

$\frac{1}{K}$  14  23  24

# F I G. 5

**FIG. 6**

F I G. 7

P(1,1) P(2,1) P(3,1) P(4,1)

P(1,2)                    P(4,2)

P(1,3)                    P(4,3)

P(1,4)                    P(4,4)

# FIG. 8